# EUROPEAN PATENT APPLICATION

(11) **EP 0 761 590 A1**
(43) Date of publication of application: **12.03.1997**
(21) Application number: 96830269.5
(22) Date of filing: 09.05.1996
(51) Int. Cl.: B67C 3/24, B65G 47/248, B65G 33/04, B08B 9/20

(54) **A device for upending and transporting bottles in continuous cycle**

(30) Priority: 11.08.1995 IT MO950119
(71) Applicant: ROSSI & CATELLI S.P.A., I-43100 Parma (IT)
(72) Inventor: Catelli, Camillo, 43100 Parma (IT); Bonetti, Leo, 43010 Pontetaro (Parma) (IT)
(74) Representative: Lanzoni, Luciano

(57) **Abstract**

A device (1) for upending and transporting bottles (2) in continuous cycle is utilised especially in continuous-cycle bottling plants using plastic bottles. The device (1) comprises a horizontal-axis (x) tubular body (70) having a guide (7) constituted by a slit (71) in a wall thereof, which slit (71) is of a breadth such as to permit passage of a neck (20) of a bottle (2). The slit (71) exhibits an intermediate portion (71b) winding helically about the tubular body (70) by an angle equal to half a revolution. A bottle feed line (3) feeds the bottles (2) one at a time to the device (1). Internally of the tubular body (70) an archimedes screw rotates on command about an axis (x), and engages the bottles (2) by necks (20) thereof, drawing them along the guide (7).

## Description

The invention relates to a device for upending and transporting bottles in continuous cycle, especially for use in continuous bottling plants where the bottles are made of plastic material. Known plants of the above kind comprise a bottle feed line on which the bottles are advanced in Indian file, one at a time. The bottles are fed in succession to various operative groups of the plant, usually including at least one sterilization or cleaning group, a washing group, a filling and a capping group. Each of these groups has compartments which take off one bottle at a time and trasport it to the various operative stations of the appropriate group.

At the start of the feed line the bottles have their open ends facing upwards, while when they go through the sterilization or cleaning and the washing group their necks face downwards - to be once more upwards-facing when they reach the filling and capping stations. Thus the bottles are upended at least twice.

Several devices are known for upending the advancing bottles in bottling plants. One of these comprises a tunnel in which the bottles are advanced. The transversal compartment of this tunnel roughly corresponds to the external shape of a bottle. The inclination of the transversal section varies progressively along the advancement axis of the bottles in the tunnel. In substance, the walls of the tunnel are helix shaped: from the inlet to the outlet of the tunnel the transversal section rotates by 180 degrees. The bottles passing through the tunnel from the inlet to the outlet are guided to rotate by 180 degrees by the tunnel walls, and the bottle advancement along the tunnel is effected by push or by gravity.

This prior-art device, known in the jargon as a "twist", exhibits some drawbacks.

Firstly, the plastic bottles advancing along the tunnel are subject to crushing forces, mainly due to the fact that during the advancement each bottle presses against the side of the bottle preceding it, resulting in deformations in some of the exiting bottles, as well as cracks, breakages, and the like.

Secondly, when the bottle shape changes, the whole tilting device has to be substituted.

Thirdly, the "twist" is massive, especially lengthwise.

A further known tipping device is provided with a plier (for every group) to grip the bottle; each plier-bottle group is then tipped, generally by means of cams, jacks or other mechanical devices, thus upending the bottle.

As there is a considerable number of sections - running into tens, in fact - in a bottling plant, these devices become not only large and unwieldy, but are constructionally complicated and expensive.

The main aim of the present invention is to provide a device for upending and/or transporting bottles in continuous cycle, especially for a plastic bottle bottling plant, which overcomes the previously-mentioned drawbacks in the prior art. An advantage of the invention is that it is constructionally simple and economical.

A further advantage of the invention is that it keeps the bottles at an equal distance one from a next.

Further, the invention can be advantageously used both as a tipper and as a transporter of bottles. A further advantage of the invention is that it can operate on bottles of different shapes, as long as the bottles exhibit a same mouth, which is in any case usually a standardized element. These aims and advantages and others besides are all attained by the device of the invention, as it is characterized in the following claims.

Further characteristics and advantages of the present invention will better emerge from the detailed description that follows, of an embodiment of the invention, illustrated in the form of a non-limiting example in the accompanying drawings, in which:
figure 1 is a plan view from above of the device inserted into a bottle feed line;

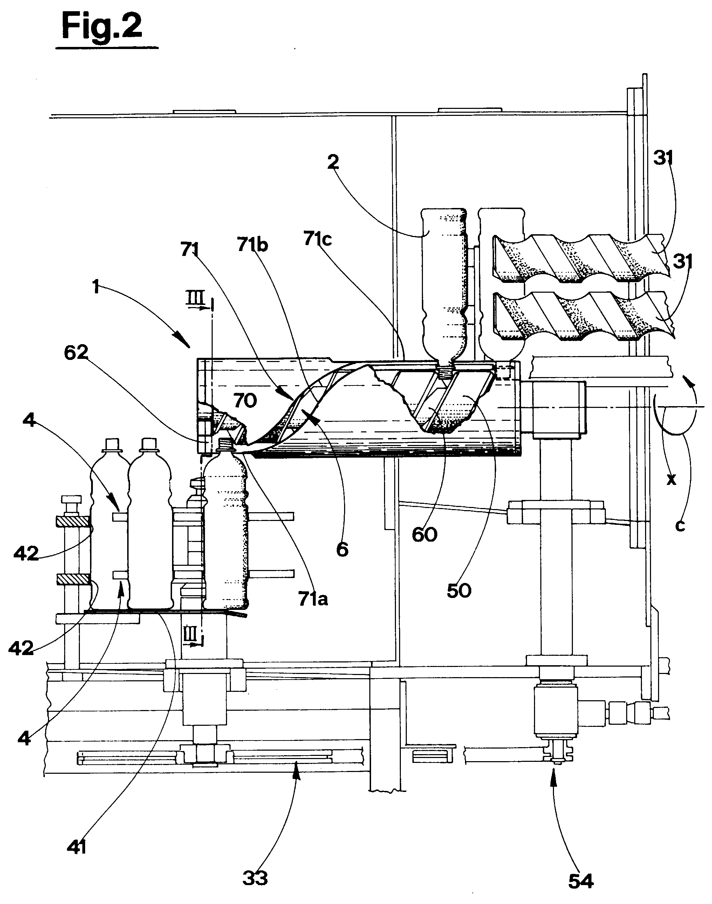

figure 2 is a lateral view from below of figure 1 with some parts removed better to evidence others;
figure 3 is a section according to line III-III of figure 2;
figure 4 is a detail of figure 3 in enlarged scale;
figure 5 is a detail of figure 1 in enlarged scale, with a part of the bottle removed.

With reference to the figures, 1 denotes in its entirety a device for upending and/or transporting bottles 2 in a bottling plant. The bottling plant comprises a bottle feed line 3 along which the bottles advance one before another. The bottles 2 are provided with a neck 20 and an annular projection or collar 21.

3a and 3b indicate tracts of the feed line 3 upstream of the device 1 and, respectively, a downstream tract.

Upstream feed line 3a, on which the bottles advance in the direction indicated by the arrow A with mouth facing upwards, comprises two transfer star conveyors 4 of known type, with vertical rotation axis actuated by a motor, denoted in its entirety by 33. Each star conveyor 4 exhibits, on its periphery, compartments 40 at constant reciprocal angular distances, each of which receives a bottle 2. Each star conveyor 4 rotates in the direction indicated by arrow B. The star conveyors 4 feed the bottles 2 at a constant rate one at a time to the device 1. Further provided are a rest plane 41 for the bottles drawn by the star conveyor 4 and a pair of cylindrical lateral walls 42 for containing the bottles 2.

The downstream feed line 3b located at the exit of the device 1 comprises a bottle transport group 30 for transporting bottles with their mouths facing downwards. The bottle transport group 30, of known type, comprises two horizontal-axis archimedes' screws 31, arranged one above another, which act on the lateral walls of the bottles 2, and two guides 32, parallel to the screws 31, with appropriate supports.

According to the invention the device 1 is provided with a drawing element comprising a preferably cylindrical body 50 having a horizontal axis x lying on a vertical plane which is tangential to the star conveyor 4. The cylindrical body 50 is keyed on a rotating shaft 51 rotating about the axis x and driven by a motor, denoted in its entirety by 54. The cylindrical body 50 rotates in the direction indicated by arrow C. A cavity 6 is predisposed on the external surface of the rotating cylindrical body 50, which cavity 6 is preferably constituted by a channel 60 having flanks 64: the channel 60 develops helically along the cylindrical body 50 and coaxially to the axis x thereof. The straight transversal section of the channel 60 is practically the inversion of the external outline shape of a neck 20 of a bottle 2.

A neck 20 can thus be inserted into the channel 60 through an opening 62 arranged inferiorly on the end of the cylindrical body 50 facing the star conveyor 4 and can exit from the channel 60 through an opening arranged superiorly on the opposite end. The step of the helix of the channel 60 is preferably greater than the diameter of a single bottle 2.

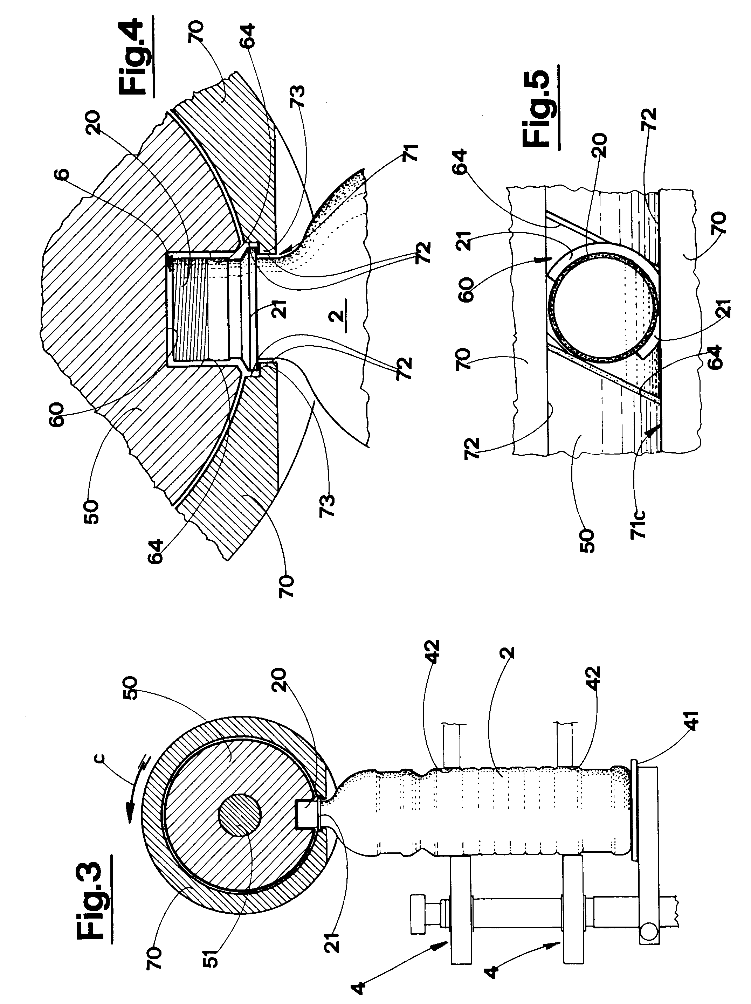

The cylindrical body 50 rotates in synchrony with the star conveyors 4 in such a way that a bottle drawn by the star conveyors 4 is guided into the channel 60, the neck 20 thereof inserting into the inlet opening 62. Figure 4 shows the neck 20 of a bottle 2 as it is entering the channel 60.

The cylindrical body 50 consists of the rotating screw element of an archimedes' screw having the function, as will be better explained hereinbelow, of impressing sufficient force on the bottle 2 to draw it along a predetermined course.

The cylindrical body 50 having the channel 60 is distinguished from other known archimedes screw-type bodies for transporting bottles - such as for example the screws 31 - by dint of the fact that the channel 60 acts on the neck 20 of the bottles 2 and not on the lateral walls thereof, as is the case with the screws 31, and also by dint of the fact that the neck 20 inserts into the channel 60 in such a way that the axis of a bottle 2 is radially directed towards the axis of rotation of the cylindrical body 50; further, the axis of the bottle 2, during the transport and/or upending thereof, is kept in the radial disposition. The cylindrical body 50 is coaxially enveloped by a fixed preferably tubular body 70. A guide 7 is afforded in the wall of the tubular body 70, which guide associates with the necks 20 of the bottles 2. The guide 7, which represents the abovementioned predetermined course of the bottles 2, is preferably constituted by a slit 71 developing along the external surface of the tubular body 70 with an almost constant breadth. The slit 71 is afforded between two facing parallel walls 72 widely enough spaced to admit a neck 20 of a bottle 2 to be inserted there-between. The parallel walls 72 exhibit, over the whole length of the slit 71, two projecting lips 73 whose reciprocal distance is smaller than a diameter of the collar 21 of a bottle 2.

In the example the slit 71 exhibits an initial straight inlet portion 71a, a helicoid intermediate portion 71b, and a straight terminal outlet portion 71c.

The initial portion 71a is parallel to the axis x and is arranged on the inferior generatrix of the tubular body 70. The initial portion 71a guides a bottle to complete a movement of pure advancement, without rotation.

The helicoid portion 71b is coaxial to the channel 60. The helicoid portion 71b winds about the tubular body 70 by an angle of 180 degrees such as to guide a bottle to complete a helicoid movement composed of an advancement in the direction of axis x and a rotation about the axis itself. At the end of the helicoid portion 71b the bottle has been upended. There can exist cases where the bottle 2 has to be rotated continuously by a predetermined angle which is different from 180 degrees. In such cases the helicoid portion 71b will wind about the axis x by whatever angle is required.

The terminal portion 71c is parallel to the axis x and is arranged on the uppermost generatrix of the tubular body 70. Like the initial portion 71a, the terminal portion 71c functions as a guide for a simple translation movement of the bottle 2 without rotation. A straight portion of the guide 7, equal to portions 71a and 71c, can also be arranged on a generatrix, neither the uppermost nor the lowermost, of the intermediate tubular body 70.

The functioning of the device 1 is described hereinbelow.

A bottle 2 advancing on the star conveyor 4 meets the device 1. The cylindrical body 50 continuously rotates in synchrony with the star conveyor 4. The neck 20 of the bottle 2 enters the channel 60 when the opening 62 of the channel 60 is situated, during a rotation of the cylindrical body 50, at the lowest point in its trajectory. At this lowest point the opening 62 is lined up with the guide 7 entry.

At this point the neck 20 of the bottle 2 is engaged both in the channel 60 and the slit 71. The rotation of the cylindrical body 50 obliges the neck 20 of the bottle 2 to follow the course of the slit 71. First the neck 20 crosses the initial portion 71a of the slit 71. During this phase the collar 21 of the bottle 2 rests on the lips 73 of the slit 71, so a rest plane for the bottom of the bottle 2 is no longer necessary. Figure 5 - referring specifically to the terminal portion 71c but applicable also to the other portions - illustrates the way in which the flanks 64 of the channel 60 of the rotating cylindrical body 50 and the parallel walls 72 of the fixed slit 71, engage the neck 20 of the bottle 2. As can be seen the abovementioned flanks 64 and parallel walls 72 are practically tangential to the neck 20 of the bottle and thus deny any lateral displacement of the bottle 2. Further, the neck 20 cannot radially exit, in the direction of the axis of the bottle 2, as it is prevented from doing so by the lips 73 which restrain the collar 21.

Subsequently the neck 20 of the bottle 2 is engaged by the helicoid portion 71b of the slit 71.

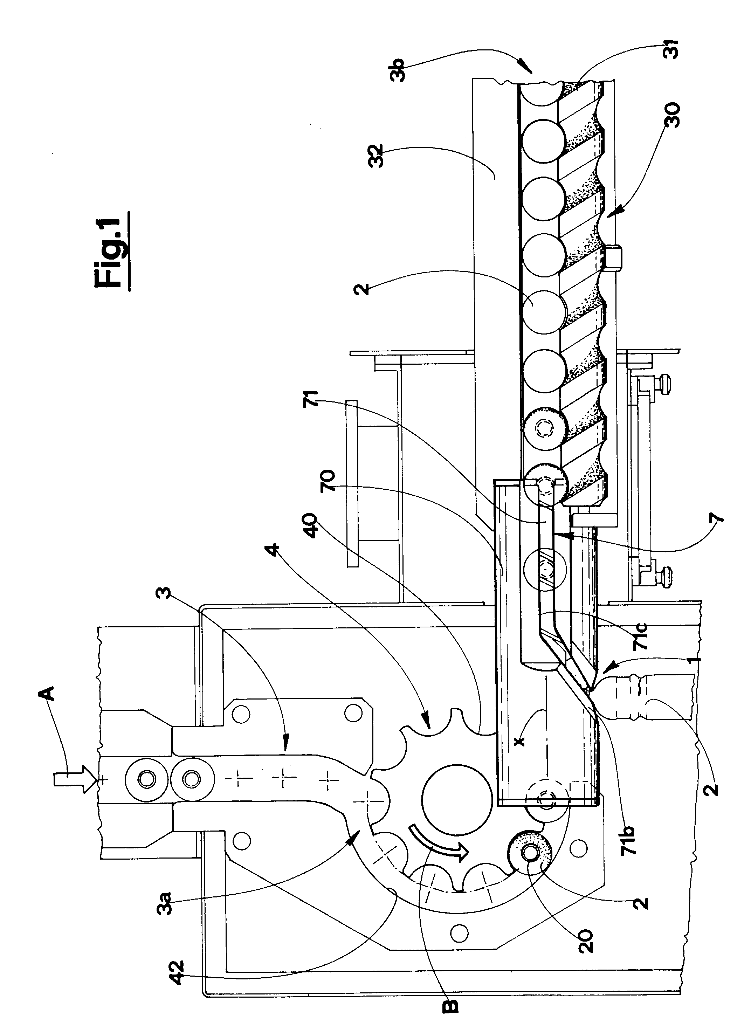

The channel 60, in cooperation with the slit 71, forces the bottle 2 to rotate about axis x, advancing axially at the same time. During this phase the bottle 2 follows a complex trajectory, one position of which is shown in figure 1. The axis of the bottle 2 is always kept more or less radial to the axis x of rotation of the cylindrical body 50.

After the neck 20 of the bottle 2 has crossed the helicoid portion 71b of the slit 71, the bottle has been turned by 180 degrees. The upending of the bottle 2 is permitted by the fact that, as has been mentioned, during the upending the collar 21 of the bottle 2 is forced against the lips 73, thus preventing the neck 20 of the bottle 2 to exit radially externalwise of the channel 60 in the direction of the axis of the bottle.

In the terminal portion 71c the bottles 2 advance without rotating with the neck facing downwards, and are finally surrendered to the downstream line 3b. Obviously the cylindrical body 50 and the bottle transport group 30 must be in reciprocal phase.

The bottles 2 cross the device 1 at a reciprocal distance which is equal to a multiple of the helix step of the channel 60.

This distance setting prevents contact between the bottles 2 which might lead to collisions with consequent bottle crushing, cracking, deformations and so on.

Since the shape and the dimensions of the necks 20 of the bottles 2 and the relative collars 21 are generally standardised and the same for all types of bottle shapes, the device 1 is practically universal. This means that it is not necessary to substitute the device 1 when a bottle shape changes during a filling operation.

It is evident that the longitudinal dimensions of the device 1 are very small, and can be even further reduced by reducing the axial length of the intermediate portion 71b of the slit 71 which winds about the tubular body 70, or the lengths of the straight portions 71a and 71c.

An advantage of the device 1 consists in the fact that it can also be used as a simple conveyor or translator of bottles. Indeed, at straight portions 71a and 71c, the device 1 functions as a bottle conveyor with, in the former case, the bottles in the mouth-upwards position and in the latter case with their mouths a downward position. Obviously portions 71a and 71c can be lengthened or shortened as desired.

The device 1 as presently described is used for upending bottles having their mouths initially upwards-facing, but with obvious modifications could be adapted for upending bottles having their mouths initially facing downwards.

## Claims

1. A device for upending and transporting bottles in continuous cycle, characterized in that it comprises: a fixed body (70) bearing a guide (7) conformed and arranged in such a way as to receive a neck (20) of a bottle (2) transiting along a bottle feed line (3) and to guide said neck (20) of said bottle (2) along a predetermined course; means for drawing said neck (20) along said course; means for preventing said neck (20) of said bottle (2) from exiting from said guide (7) in a direction of an axis of said bottle (2).

2. A device as in claim 1, characterized in that said means for drawing said neck (20) of said bottle (2) comprise: a cylindrical body (50) rotating on command; a channel (60) having breadth and depth of such dimensions as to be able to house said neck (20) of said bottle (2), which channel (60) extends along a helix coaxial to an axis (x) of rotation of said cylindrical body (50); a bottle (2) having a neck (20) inserted into said channel (60) interacting, following said rotation of said cylindrical body (50), with flanks (64) of said channel (60) such that said neck (20) is drawn along said course.

3. A device as in claim 2, characterized in that said fixed body (70) is tubular and is external of and coaxial to said rotating cylindrical body (50).

4. A device as in any of the preceding claims, characterized in that: said guide (7) comprises a slit (71) afforded in said fixed body (70) and flanked by facing walls (72); said means for preventing exit of said neck (20) comprising two parallel lips (73), each of which is predisposed on a wall (72) of said slit (71) and each of which interacts with a collar (21) of said neck (20); a reciprocal distance between said lips (73) being less than a diameter of said collar (21) and greater than a diameter of said neck (20) of said bottle (2).

5. A device as in claim 4, characterized in that said slit (71) winds in a spiral fashion along an external surface of said tubular body (70).

6. A device as in claim 5, characterized in that said slit (71) winds by a total angle of 180 degrees.
